# EUROPEAN PATENT APPLICATION

(11) **EP 2 796 279 A1**
(43) Date of publication of application: **29.10.2014**
(21) Application number: 12859318.3
(22) Date of filing: 18.12.2012
(51) Int. Cl.: B29D 30/26, B29D 30/32, B29D 30/08

(54) **TIRE BEAD TRANSFER RING AND TRANSFER METHOD THEREOF**

(30) Priority: 22.12.2011 CN 201110433977
(71) Applicant: Yuan, Zhongxue, Qingdao, Shandong 266042 (CN)
(72) Inventor: WANG, Yanshu, Qingdao Shandong 266042 (CN); SUN, Mingxin, Qingdao Shandong 266042 (CN); WU, Shoutao, Qingdao Shandong 266042 (CN); ZHANG, Hongye, Qingdao Shandong 266042 (CN); YUAN, Zhongxue, Qingdao Shandong 266042 (CN)
(74) Representative: Intès, Didier Gérard André
(86) International application number: PCT/CN2012/086860
(87) International publication number: WO 2013/091530

(57) **Abstract**

The invention provides a tire bead transfer ring and a transfer method thereof. The tire bead transfer ring and the transfer method adopts a complete magnetic adsorption method and a photoelectric detection approach to improve the stability of picking, clamping and transferring of tire beads, prevent tire beads from slippage and deformation and ensure the coaxiality and verticality between tire beads and a tire building drum. The tire bead transfer ring comprises a left semi ring and a right semi ring which are capable of separating and meeting in opposite directions, wherein the left semi ring and the right semi ring are arranged on a vertical mounting base which is capable of achieving a reciprocating movement by slide guides arranged on the top part of the mounting base. A protruding boss in the shape of a semi ring is respectively arranged on the left semi ring and the right semi ring along the inner diameter thereof. A plurality of magnets which are used for attracting bead rings are arranged behind the protruding bosses, wherein the functions of the protruding bosses comprise attracting the bead rings of tire beads and forming a vertical space margin between the protruding bosses and the other parts of the body of the tire bead transfer ring. Accordingly, when bead apexes collide with the body of the tire bead transfer ring, the opposite rebound displacement of the bead apexes can be limited within the space margin.

## Description

### FIELD OF THE DISCLOSURE

The invention relates to a tire bead transfer ring and a transfer method thereof adaptable to processing procedures of tire building and belongs to the field of the manufacture of rubber machinery.

### BACKGROUND OF THE DISCLOSURE

In the prior art, a rubber tire mainly comprises steel-wire bead rings, a carcass component and a belt-tread component. In the process of manufacturing green tires, preset tire beads are commonly picked from preset positions by a tire bead transfer ring, and then, the tire beads are conveyed and axially arranged on a tire building drum in a sleeved manner.

The flatness and verticality of tire beads have a direct influence on the uniformity in sequentially attaching and turning up green tires in the processes of positioning and conveying tire beads. Accordingly, the structures of picking, positioning and transferring tire beads are of vital importance. Mechanical structures are commonly used in the prior art.

Mechanical tire bead transfer device are characterized by adopting an actuating mechanism driven by a pneumatic cylinder to clamp tire beads. Due to the fact that the accuracy in controlling clamping force is relatively low, a clamping force that is too small is prone to the slippage of tire beads, and an excessive clamping force is prone to the deformation of tire beads, it is therefore difficult for the mechanical tire bead transfer device to meet the subsequent processing requirements of green tires. Furthermore, obvious defects which are caused by wear and tear in long-time high-frequency swing and linear motion have an obvious effect on the accuracy in mechanical clamping and conveying.

If we consider the disclosure of patent application No, 201020689149.2 titled tire bead transfer ring as an example, the technical solution of said disclosure of the tire bead transfer ring is characterized in that a clamping device with a connecting rod mechanism is arranged on the tire bead transfer ring body and the flexible actuation is achieved by a pneumatic cylinder; suction discs used for absorbing the tire beads are evenly fixed on the tire bead transfer ring body so as to improve the accuracy in presetting and conveying the tire beads; a switching device is connected with the tire bead transfer ring body and the separating and meeting actions of the tire bead transfer ring body can be achieved by driving gears for driving pneumatic cylinder; tire beads are transferred to a tire building drum and released by the separating of a left semi ring body and a right semi ring body.

Simultaneously, a magnetic adsorption and a mechanical clamping mechanism are adopted in said disclosure of the application. However, the disclosure of this application presents obvious defects, such as:
1. The problems of the slippage and deformation of tire beads and low accuracy in positioning and transferring tire beads cannot be completely solved by mechanical picking and clamping;
2. Due to the facts that bead apexes are positioned on the outer diameter of bead rings and are relatively flexible, the bead apexes are prone to colliding with the tire bead transfer ring body in a flexible manner and being bounced off by an inverse elastic force to detach bead rings from the surface of the tire bead transfer ring body. Therefore, a relative wide gap is formed between parts of the bead rings and the tire bead transfer ring body and the flatness and verticality of magnetic adsorption is poor;
3. Detection of the flatness and verticality of magnetic adsorption of tire beads are disregarded and merely relies on visual inspection by employees on site;
4. Uncompleted separating and meeting actions of the left semi ring and the right semi ring are caused by uneven distribution of air pressure within tubes or the decrease of air tightness in using the pneumatic cylinder to drive the separating and meeting actions in a long time, thereby directly influencing effects of absorbing and clamping tire beads.

In view of the problems in the prior art listed above, the invention provides a tire bead transfer ring and a transfer method thereof.

### CONTENTS OF THE INVENTION

The invention provides a tire bead transfer ring and a transfer method thereof. The tire bead transfer ring and the transfer method thereof aim at solving the problems listed above in the prior art, thereby adopting a complete magnetic adsorption method and a photoelectric detection approach for improving the stability of picking, clamping and transferring of tire beads and preventing tire beads from slippage and deformation, so as to ensure the coaxiality and verticality between tire beads and a tire building drum.

The tire bead transfer ring and the transfer method thereof further aim at solving the problem of flexible collision between bead apexes and the body of the tire bead transfer ring and improving the magnetic adsorption effects of bead rings by presetting a space margin for bead apexes, thereby improving the overall flatness and verticality of tire beads.

The tire bead transfer ring and the transfer method thereof further aim at improving the accuracy in the separating and meeting actions of the left semi ring and the right semi ring by adopting a gear rotor to drive the tire bead transfer ring to separate and meet.

In order to achieve the aims listed above, the tire bead transfer ring further comprises a left semi ring and a right semi ring, wherein the left semi ring and the right semi ring are arranged on a vertical mounting base which is capable of achieving a reciprocating movement by slide guides arranged on the top part of the mounting base.

Compared with the prior art, a protruding boss in the shape of a semi ring is respectively arranged on the left semi ring and the right semi ring along the inner diameter thereof and a plurality of magnets which are used for attracting tire beads are arranged behind the protruding bosses.

Compared with the mechanical clamping mechanism in the prior art, the tire bead transfer ring and the transfer method thereof adopt a complete magnetic adsorption method. Accordingly, the control of the force for picking and clamping the tire bead is easy to improve.

The protruding bosses which are arranged along the inner diameter of the tire bead transfer ring have two functions, wherein firstly the protruding bosses is used for composing bead rings of tire beads in magnetic adsorption; secondly, a vertical space margin is formed between the protruding bosses and the other parts of the body of the tire bead transfer ring, so that the opposite rebound displacement of bead apexes can be limited within the space margin even bead apexes collide with the body of the tire bead transfer ring without reducing the tightness in magnetic adsorption of bead rings and the protruding bosses. Accordingly, the flatness and verticality in attracting tire beads can be provided with a strong guarantee.

In order to achieve an accurate and on-line test of whether the tire beads are attracted to precious positions and whether the flatness and verticality of the tire beads attracted is enough, adoptable measurements for improvement comprise that a plurality of photoelectric detectors are symmetrically arranged on the surfaces of the protruding bosses to which tire beads are attracted.

In order to ensure the accurate meeting of the left semi ring and the right semi ring when the left semi ring and the right semi ring are in a separating manner, a pair of positioning blocks which are engaged with each other are positioned at the connecting end between the left semi ring and the right semi ring. Therefore, the accurate meeting of the left semi ring and the right semi ring can be achieved by the connection and meshing between the pair of positioning blocks.

In order to further improve the accuracy of the separating and meeting operations of the left semi ring and the right semi ring and the precision under the conditions of long-time and frequent usage, a pair of supports are connected with the bottom of the outer circumference of the left semi ring and the right semi ring, and each support is respectively arranged on a first rotate shaft and a second rotate shaft which are positioned on a mounting base in a sleeved manner. Each of a pair of gears which are engaged with each other are respectively arranged on the first rotate shaft and the second rotate shaft; a gear motor is positioned on the mounting base and a group of synchronous belt wheels and a synchronous belt are drivingly connected between the gear motor and the first rotate shaft.

On the basis of the design conception of said invention and said improvement based on adopting the tire bead transfer ring, the invention further achieves a tire bead transfer method.

The tire bead transfer method comprises the following steps that: firstly, the tire bead transfer ring slides to preset work positions along the top slide guides to pick tire beads and transfer tire beads to be axially arranged the tire beads on the tire building drum in a sleeved manner; secondly, in the process of positioning and transferring tire beads, the left semi ring and the right semi ring move in opposite directions to meet and bead rings are attracted to the ring-shaped protruding bosses so as to enable bead apexes which are positioned on the outer diameter of tire beads attach to the body of the tire bead transfer ring.

Further, a plurality of photoelectric detectors which are used for testing results of adsorption are arranged on the surfaces of the protruding bosses to which tire beads are attracted.

Furthermore, the meshing between the left semi ring and the right semi ring are achieved by a pair of positioning blocks when the left semi ring and the right semi ring moves in opposite directions for meeting.

Further, the left semi ring and the right semi ring are respectively arranged on a first rotate shaft and a second rotate shaft which are provided with a pair of gears engaged with each other through supports in a sleeved manner, wherein the fixed-axis rotation of the first rotate shaft is driven by a gear motor and the reverse rotation of the second rotate shaft is driven by meshing of gears, so as to drive and control the separating action and the separating angles between the left semi ring and the right semi ring.

In summary, the tire bead transfer ring and the transfer method thereof have the advantages and positive effects that: firstly, the coaxiality between tire beads and the tire building drum are significantly improved in the process of transferring and problems of slippage and deformation of tire beads can be effectively avoided by adopting a complete magnetic adsorption method; secondly, whether tire beads are attracted to preset positions and whether the flatness and verticality of the tire beads attracted are met with requirements can be accurately detected online by adopting the manner of photoelectric detection; thirdly, the elastic collision between bead apexes and the body of the tire bead transfer ring can be effectively solved so as to significantly improve the overall flatness and verticality of tire beads; fourthly, the separating and meeting action of the body of the tire bead transfer ring can be driven by the gear motor so as to improve the accuracy of the separating and meeting operations of the left semi ring and the right semi ring.

### BRIEF DESCRIPTION OF THE DRAWINGS

Referring to the drawings, further descriptions of the tire bead transfer ring and the transfer method thereof are provided as follows:
FIG. 1 is a schematic diagram of the structures of the tire bead transfer ring in a separating mode and a meeting mode respectively by comparison;
FIG. 2 is a schematic diagram of the lateral view of the FIG. 1;
FIG. 3 is a schematic diagram of the A-A section view of the FIG. 2;

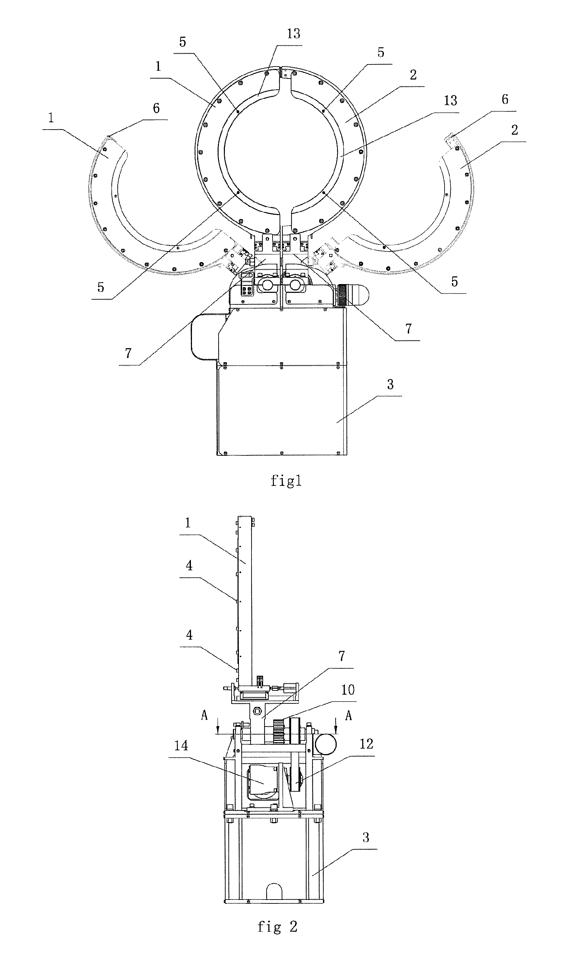

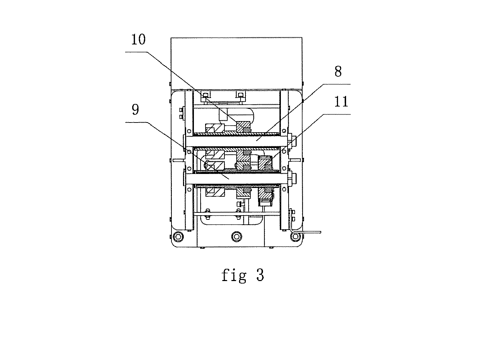

As shown in the FIG.1, FIG. 2, and FIG 3, graphical representations are the left semi ring 1, the right semi ring 2, the mounting base 3, the magnet 4, the optical-coupler detector 5, the positioning block 6, the support 7, the first rotate shaft 9, the second rotate shaft 8, the gear 10, the synchronous belt wheel 11, the synchronous belt 12, the protruding boss 13 and the gear motor 14.

### DETAILED DESCRIPTION:

### Embodiment 1:

As shown in the FIG.1, FIG 2 and FIG 3, the tire bead transfer ring mainly comprises a left semi ring 1 and a right semi ring 2 which move in opposite directions for separating and meeting.

A pair of positioning blocks 6 which are engaged with each other are arranged at the connecting end between the left semi ring 1 and the right semi ring 2. Depending on the accurate connection between the positioning blocks 6, relatively great vertical flatness of the overall body of the tire bead transfer ring can be achieved upon the left semi ring and the right semi ring meeting, thereby being beneficial to improving the accuracy in positioning tire beads.

The left semi ring 1 and the right semi ring 2 are respectively arranged a vertical mounting base 3 which is capable of achieving a reciprocating movement by slide guides arranged on the top part of the mounting base.

A protruding boss 13 in the shape of a semi ring is respectively arranged along the inner diameter of the left semi ring 1 and the right semi ring 2 and a plurality of magnets 4 which are used for attracting tire beads are arranged behind the protruding bosses. An approximate ring can be formed by the protruding bosses 13 on the left semi ring and the right semi ring. Tire beads of tires can be attracted onto the ring formed by the protruding bosses by a magnetic adsorption force to achieve the positioning tire beads.

Due to the facts that a vertical upper space margin is formed between the protruding bosses 13 and the other parts of the left semi ring and the right semi ring, a vertical gap can be formed between bead apexes and the body of the tire bead transfer ring. Accordingly, direct elastic collision can be prevented in most cases. Even though the elastic collision occurred, enough space can be provided for the rebound displacement of bead apexes, so as to prevent tire beads from detaching from the protruding bosses 13 with the bead apexes, and therefore, the tightness of the magnetic adsorption between tire beads and the protruding bosses are not influenced and a strong guarantee of the overall flatness and verticality can be provided in adsorbing tire beads.

Four fiber-optic detectors 5 are symmetrically arranged on the surfaces of the protruding bosses to which tire beads are attracted onto along the axial central line of the body of the tire bead transfer ring in an embedded manner. All the four fiber-optic detectors 5 are embedded in an inner groove formed in the tire bead transfer ring without influencing the magnetic adsorption of the protruding bosses 13 to attract bead rings.

The four fiber-optic detectors 5 simultaneously detect gaps between bead rings and the protruding bosses 13 in the process of the magnetic adsorption from different positions. If the detection value of a position is excessive or difference values among four consecutive detection values are too large, bead rings are not completely attracted onto the protruding bosses 13, the overall flatness and verticality between tire beads and the body of the tire bead transfer ring is relatively poor, and the tire beads need to be positioned again.

The corresponding separating and meeting actions of the left semi ring and the right semi ring are achieved by a control device which comprises a pair of supports 7, a first rotate shaft 9 and a second rotate shaft 8, wherein the supports 7 are connected with the periphery of the left semi ring and the right semi ring and each support is respectively arranged on the first rotate shaft 9 and the second rotate shaft 8 in a sleeved manner. Each of a pair of gears 10 which are engaged with each other is respectively positioned on the first rotate shaft 9 and the second rotate shaft 10.

The mounting base 3 is provided with a gear motor 14, wherein a group of synchronous wheels 11 and a synchronous belt 12 are drivingly connected between the gear motor 14 and the first rotate shaft 9.

The structural improvement of the tire bead transfer ring is based on the design conception of the transfer method in detail which is shown as follows.

The tire bead transfer ring slides to preset positions along the slide guides to pick and transfer tire beads, and enable the tire beads to be axially mounted on the tire building drum in a sleeved manner; secondly, in the process of positioning and transferring \ tire beads, the left semi ring and the right semi ring move in opposite directions to meet and bead rings are attracted onto the annular protruding bosses so as to enable bead apexes which are positioned on the outer diameter of tire beads to attach to the body of the tire bead transfer ring.

A plurality of photoelectric detectors which are used for testing results of adsorption are typically arranged on the surfaces of the protruding bosses to which tire beads are attracted.

The meshing between the left semi ring and the right semi ring are typically achieved by a pair of positioning blocks when the left semi ring and the right semi ring meeting correspondingly.

The left semi ring and the right semi ring are for instance respectively arranged on a first rotate shaft and a second rotate shaft which are provided with a pair of gears engaged with each other by supports in a sleeved manner, wherein the fixed-axis rotation of the first rotate shaft is driven by a gear motor and the reverse rotation of the second rotate shaft is driven by the meshing of gears, so as to drive and control the separating and the separating angles between the left semi ring and the right semi ring.

## Claims

1. A tire bead transfer ring comprising a left semi ring (1) and a right semi ring (2) which are capable of separating and meeting in opposite directions, wherein the left semi ring (1) and the right semi ring (2) are arranged on a vertical mounting base (3) which is capable of achieving a reciprocating movement by slide guides arranged on the top part of the mounting base, the tire bead transfer ring being **characterized in that** a protruding boss (13) in the shape of a semi ring is respectively arranged on the left semi ring (1) and the right semi ring (2) along the inner diameter thereof and a plurality of magnets (14) which are used for attracting bead rings are arranged behind the protruding bosses (13).

2. A tire bead transfer ring according to the claim 1, said tire bead transfer ring being **characterized in that** a plurality of photoelectric detectors (5) are symmetrically arranged on the surfaces of the protruding bosses to which tire beads are attracted.

3. A tire bead transfer ring according to the claim 1 or the claim 2, said tire bead transfer ring being **characterized in that** a pair of positioning blocks (6) which are engaged with each other are arranged at the connecting end between the left semi ring (1) and the right semi ring (2).

4. A tire bead transfer ring according to the claim 3, said tire bead transfer ring being **characterized in that** a pair of supports (7) are connected with the bottom of the outer circumference of the left semi ring (1) and the right semi ring (2), wherein the support is sleevedly arranged on a first rotate shaft (9) and a second rotate shaft (8) respectively which are positioned on the mounting base (3); a pair of gears (10) which are engaged with each other are arranged on the first rotate shaft (9) and the second rotate shaft (8); a gear motor (14) is mounted on the mounting base (3) and synchronous belt wheels (11) and a synchronous belt (12) are drivingly connected between the gear motor (14) and the first rotate shaft (9).

5. A transfer method using a tire bead transfer ring according to any of claim 1 to claim 4, wherein the tire bead transfer ring slides to preset positions along the slide guides to pick and convey the tire beads, and enable the tire beads to be axially mounted on the tire building drum in a sleeved manner, said transfer method being **characterized in that** the left semi ring (1) and the right semi ring (2) of the tire bead transfer ring meet in opposite directions and bead rings are attracted on the protruding bosses (13) in the shape of a ring in a magnetic manner, and accordingly, the bead apexes which are positioned on the outer diameter of bead rings attach to the body of the tire bead transfer ring.

6. The transfer method according to the claim 5, said transfer method of the tire bead transfer ring being **characterized in that** a plurality of photoelectric detectors (5) are symmetrically arranged on the surfaces of the protruding bosses to which tire beads are attracted.

7. The transfer method according to claim 5 or claim 6, said transfer method of the tire bead transfer ring being **characterized in that** abutting meshing between the left semi ring and the right semi ring is achieved by the pair of positioning blocks (6) when the left semi ring (1) and the right semi ring (2) meet in opposite directions.

8. The transfer method according to the claim 7, said transfer method of the tire bead transfer ring being **characterized in that** the left semi ring (1) and the right semi ring (2) are respectively mounted on the first rotate shaft (9) and the second rotate shaft (8) which are provided with a pair of gears engaged with each other through the supports (7); the fixed-axis rotation of the first rotate shaft (9) is driven by a gear motor (14) and the reverse rotation of the second rotate shaft (8) is driven by the meshing of the pair of gears (10), so as to drive and control the separating action and separating angles between the left semi ring (1) and the right semi ring (2).
